# FASCICULE DE BREVET EUROPEEN

(11) **EP 0 392 884 B1**
(45) Date de publication et mention de la délivrance du brevet: **29.05.1996**
(21) Numéro de dépôt: 90400396.9
(22) Date de dépôt: 14.02.1990
(51) Int. Cl.: B44B 7/00, B44B 5/02

(54) **Rouleaux de marquage thermique pour bandes en laine minérale et procédé**
Walzen zur thermischen Markierung von Mineralfaserbahnen und Verfahren
Rollers for thermally marking mineral fibre webs and method

(30) Priorité: 13.03.1989 DE 3908128
(43) Date de publication de la demande: 17.10.1990
(73) Titulaire: ISOVER SAINT-GOBAIN, F-92400 Courbevoie (FR)
(72) Inventeur: Kaufmann, Friedrich, D-6703 Limburgerhof (DE); Schlossherr, Horst-Werner, D-6724 Dudenhofen (DE); Zinn, Egon, D-6701 Meckenheim (DE)
(74) Mandataire: KUHNEN, WACKER & PARTNER

(56) Documents cités:
- WO-A-87/06198
- DE-C- 0 426 022
- DE-U- 8 625 120
- DE-U- 8 903 084
- GB-A- 2 084 921
- US-A- 3 961 575

## Description

La présente invention concerne un dispositif de marquage thermique de la surface d'une bande en laine minérale contenant un liant. Elle s'applique notamment à l'obtention de bandes en laine minérale munies de marques décoratives ou fonctionelles.

De la DE-C 426 022 un dispositif pour le marquage thermique de raisons sociales ou d'autres indications sur du bois et d'autres matériaux au moyen de disques en couleur chauffants électriques est connu. Un support de plaque chauffante qui porte le disque de couleur est fixé sur la circonférence d'un cylindre. Entre la plaque chauffante et le support de plaque chauffante se trouve une couche isolante. La plaque chauffante est montée sur le support de plaque chauffante de manière à pouvoir se dilater sans obstacle de sorte que ce dernier n'en est pas influencé lorsque la plaque chauffante se déforme à la suite du réchauffement. Le disque de couleur peut se dilater de son côté, indépendamment de la plaque chauffante étant donné qu'il est serré sur la plaque chauffante de manière élastique. La forme des éléments de marquage du disque de couleur n'est pas décrite dans plus de détails. La question de savoir si les éléments de marquage sont en saillie par rapport à la surface du disque de couleur n'est pas révélée dans la DE-C 426 022. Une puissance de chauffage à réglage local varié n'est pas réalisée dans ce dispositif. Par opposition, la plaque chauffante est chauffée sans aucune possibilité de réglage local. La plaque chauffante conduit ensuite la chaleur à la plaque de clichée ou au disque de couleur. La DE-C 426 022 s'intéresse en premier lieu à la fixation élastique du disque de couleur sur la plaque chauffante et la fixation de celle-ci au support de plaque chauffante pour proposer une solution faisant face aux déformations de ces composants à la suite du réchauffement, afin de permettre une dilatation sans obstacle des plaques l'une par rapport à l'autre.

La US-A 3 961 575 révèle un dispositif d'impression avec une plaque arrière d'une pièce et reliée à un poussoir, qui peut être déplacée en va-et-vient ou peut être stationnaire. La plaque arrière présente une surface correspondant à la surface d'impression. Un tampon ou un élément de marquage, qui porte des tampons libres ou des endroits de marquage, est amené à s'adapter automatiquement moyennant des moyens de précontrainte à ressort ou un rembourrage élastique aux contours de la surface d'impression. Des inserts chauffants sont connectés à chaque tampon de marquage ou élément de marquage. Ils alimentent chaque élément de marquage en une quantité de chaleur constante. Un composant élastique, par exemple un rembourrage élastique, qui est naturellement flexible, compense pour chaque tampon ou chaque élément de marquage les minimes différences dans des bouteilles qui ont été fabriquées avec les formes d'une grandeur déterminée, dans la surface de plastique elle-même et les variations d'orientation. Des éléments chauffants à cartouche sont montrés insérés dans chacun des blocs. Les conduites comme la paire de conduites des éléments chauffants sont connectées à un dispositif de commande de la température. Les tampons à surface plate sont d'une pièce et montés sur les blocs d'éléments chauffants au moyen d'une masse de brasage en argent et sont donc en conduction thermique avec ceux-ci. Le dispositif d'impression décrit dans la US-A 3 961 575 ne présente ni un cylindre logé sur un bâti pouvant être relevé et abaissé ni les éléments de marquage chauffants électriques disposés sur la circonférence du cylindre. Le dispositif d'impression montré ne dispose pas non plus d'endroits de marquage dont la surface forme une enveloppe fictive de manière à ce qu'elle pourrait au moins approximativement former la surface du corps d'un cylindre circulaire dont l'axe correspondrait à l'axe du cylindre. La US-A 3 961 575 révèle certes des éléments chauffants qui peuvent être alimentés indépendamment l'un de l'autre en énergie électrique pour mettre à disposition des quantités de chaleur, le cas échéant différentes, à chaque élément de marquage, étant donné que des ornements différents requièrent des quantités de chaleur différentes s'ils doivent fonctionner dans des conditions optimales. Cependant dans ce cas il ne s'agit pas d'un disque de couleur avec une puissance de chauffage à réglage local varié mais de disques de couleur en disposition voisine et isolés réciproquement du point de vue thermique selon leurs exigences et chacun d'eux intégralement alimenté de températures diverses. Sur la surface d'un disque de couleur, la puissance de chauffage dans cet état de la technique, est constante et n'est pas réglable.

Dans la demande de brevet EP-A-244 035, il est décrit un dispositif qui appose des marques transversales sur une bande en laine minérale, selon une direction perpendiculaire au sens de défilement de la bande. Ce dispositif est constitué par un cylindre portant à sa périphérie des barrettes chauffantes dont la forme et la position correspondent aux marques à apposer. Le cylindre tourne avec une vitesse choisie de façon à ce que la surface plane d'une barrette chauffante soit orientée parallèlement au plan de la bande lorsqu'elle roule sur la surface de la bande en laine minérale. Les barrettes en métal sont chauffées électriquement à une température suffisamment élevée pour que leur contact avec la laine minérale engendre une zone d'altération - correspondant au contour de la barrette de marquage - dans laquelle le liant est au moins partiellement dégradé ce qui a pour conséquence une modification de sa couleur et laisse une empreinte indélébile. En raison des problèmes de dilatation thermique, on préfère employer des barrettes relativement courtes et surtout espacées les unes par rapport aux autres le long d'une même génératrice du cylindre. Sont ainsi évitées les phénomènes de cloquages ou autres déformations du même type qui pourraient entraîner une imprécision du motif de marquage due à un effet thermique non uniforme. Les motifs obtenus avec le dispositif décrit dans EP-A-244 035 sont de ce fait en pointillé. Pour former des marques autres que des tirets courts parallèles à l'axe du cylindre, on peut courber une barrette. Toutefois, les bords des barrettes s'imprègnent dans la bande en laine minérale beaucoup plus profondément d'où une surchauffe locale qui entraîne une imprécision des contours. De plus, le coût d'un dispositif devient alors élevé et ceci ne résoud pas le problème de l'espacement minimum entre les motifs. Des motifs complexes comportant par exemple des lignes croisées donnent des marques confuses dues à une température excessive aux points de croisement, là où se concentrent les apports thermiques. D'autre part, les différents motifs ont des dilatations différentes, ce qui soumet le dispositif à une contrainte mécanique continue conduisant à une usure rapide des pièces en question.

L'invention a pour but un dispositif de marquage amélioré permettant l'apposition sur une bande en laine minérale de marques aux contours nets et précis, même pour des motifs complexes.

Conformément au préambule de la revendication 1 et à l'enseignement de la demande de brevet EP-A-244 035, le dispositif de marquage thermique selon l'invention comporte un cylindre monté en rotation dans un châssis mobile en hauteur, muni à sa périphérie d'au moins un élément de marquage de préférence chauffé électriquement. Suivant l'invention, cet élément de marquage porte une plaque d'impression dont les caractères en forme, par exemple, de lettres, chiffres, signes, images, font saillie au-dessus de la surface de la plaque d'impression, l'enveloppe des caractères étant au moins approximativement confondue avec celle d'un cylindre droit dont l'axe coïncide avec l'axe du cylindre, et l'élément de marquage est chauffé par au moins un élément chauffant dont la puissance de chauffage est réglable de manière différentielle pour des locations différents en vue de l'obtention d'une image de marquage désirée.

Avec des caractères faisant très nettement saillie au-dessus de la plaque d'impression, on évite tout risque de contact entre la plaque d'impression elle-même et la surface de la laine minérale. Il ne peut donc pas se former de zones d'altération parasites qui couvriraient l'empreinte des caractères. D'autre part, l'apport d'énergie thermique aux caractères est indirect et homogénéisé par la plaque d'impression, ce qui permet d'utiliser des caractères à lignes croisées sans qu'un excès de température significatif ne se produise aux points de croisement.

De plus, l'enveloppe de la surface des caractères étant au moins approximativement confondue avec celle d'un cylindre droit dont l'axe coïnciderait avec l'axe du cylindre de marquage, l'action des caractères sur la surface de la laine minérale est uniforme. Le motif de marquage obtenu est de ce fait très net et se distingue clairement des zones de la surfaces de la laine minérale où le liant n'a pas été altéré.

Il est possible d'appliquer des quantités de chaleur différentes à la surface de la plaque d'impression, et aussi suivant les caractères. On peut ainsi prévoir des zones prédéterminées à la surface des caractères, au moins approximativement isothermes. Plus généralement cette mesure conduit à une meilleure maîtrise du profil de températures, à la fois de la plaque d'impression et des caractères, profil de températures qui est converti en un profil d'altération du liant, ce profil pouvant d'ailleurs être intentionnellement inhomogène si tel est l'effet recherché.

Pour un même élément de marquage, on obtient ainsi autant de configurations différentes d'empreintes que de profils distincts de températures.

Conformément à la revendication 3, les différences de déperdition de chaleur entre les différentes zones de la plaque d'impression et/ou entre les différents caractères sont compensées par un apport localisé en puissance complémentaire - positif ou négatif. On améliore ainsi l'homogénéité de l'empreinte de marquage, ce qui est spécialement avantageux pour des empreintes en forme de griffes.

L'homogénéité peut également être perturbée par la présence d'une accumulation de matière en certains points des caractères, ceci est par exemple le cas au point de croisement de la lettre "X". Dans ce cas, la puissance de chauffage offerte sous le point de croisement de "X" sera choisie plus faible que celle attribuée aux extrémités du "X".

De plus, les mesures de la revendication 3 permettent également de compenser les différences de demande de chaleur dues aux configurations différentes des caractères. En effet, si on souhaite obtenir deux empreintes au moins approximativement de même intensité pour deux caractères respectivement en forme de "B" ou d'un point, il est judicieux d'offrir au "point" une puissance de chauffage inférieure à celle offerte pour le "B".

A l'inverse - et conformément à la revendication 4 - on peut accentuer les différences de déperditions de chaleur si on souhaite produire des motifs de marquage présentant une inhomogénéité sélective, ce qui conduit de manière contrôlée à des altérations d'intensités diverses, par exemple pour obtenir des gradations du noircissement correspondant en substance à celles des gradations de gris dans une photographie en noir et blanc.

Selon la revendication 5, l'élément chauffant est de préférence une cartouche chauffante. Ces cartouches chauffantes sont avantageusement disponibles chez un grand nombre de fournisseurs et de plus leur fixation ne nécessite qu'une simple forure.

Les cartouches utilisées présentent de préférence, des enroulements chauffants dont l'épaisseur - et ainsi la puissance de chauffage - varient dans le sens de la longueur de la cartouche. De telles cartouches chauffantes peuvent être fabriquées sans difficulté et à bon compte et sont de plus relativement robustes. Une même cartouche peut éventuellement comporter plusieurs enroulements chauffants indépendants, activables de préférence séparément, de manière à diversifier les puissances de chauffage attribuables selon les besoins aux divers endroits des cartouches.

Dans une variante plus spécialement préférée de l'invention revendiquée en 7, la plaque d'impression est elle-même d'une configuration cintrée, de sorte que sa surface définisse approximativement un cylindre de révolution centré sur l'axe du cylindre de marquage. Ceci permet d'obtenir une surface de marquage équidistante à la surface de la plaque d'impression, et donc d'utiliser des caractères de hauteur constante.

De préférence et selon la revendication 8, l'élément de marquage est monté à coulissement sur le corps de base du cylindre, en interposant un bloc isolant calorifuge entre le corps de base du cylindre et l'élément de marquage. Ainsi la dilatation thermique des éléments de marquage ne produit pas de tensions notables et pratiquement pas de déformation des éléments de marquage.

Conformément à la revendication 9, les éléments de fixation de chaque élément de marquage ont une forme et/ou un mode de montage dans des éléments faiblement conducteurs qui contribuent à ce que l'énergie thermique s'évacue préférentiellement par la surface externe de l'élément de marquage.

On utilise par exemple un élément de fixation ayant la forme d'une cheville de montage présentant au moins sur une partie de sa longueur une forme prismatique triangulaire. La forme prismatique limite les pertes de chaleur le long des arêtes du prisme. De telles déperditions de chaleur peuvent en outre être réduites par l'utilisation au niveau de la zone de montage de la cheville d'une matière dure, mauvaise conductrice de la chaleur et résistante à chaud, comme de l'oxyde de zirconium.

Des paliers en oxyde de zirconium ont par ailleurs un faible coefficient de dilatation et sont inertes à l'égard des produits d'altération du liant qui peuvent par contre s'avérer corrosifs pour des paliers métalliques classiques.

Avantageusement et suivant la revendication 11, l'apport d'énergie thermique est effectué de manière propre à chaque élément ou groupe d'éléments de marquage. Ceci conduit à des commandes de rapport faciles à obtenir sans modification structurelle en ne chauffant, par exemple, qu'un seul élément de marquage souhaité sur deux ou sur n, ce qui permet des variations dans l'espacement et/ou l'impression elle-même d'empreintes de marquage successives avec des empreintes de marquage semblables et/ou différentes.

Conformément au mode de réalisation revendiqué en 12, le corps de base du cylindre de marquage a la forme d'un polygone cylindrique dont le nombre de faces correspond au nombre maximum des éléments de marquage - semblables ou différents - disposés à la périphérie du cylindre.

Les surfaces planes des faces du polygone sont ainsi disponibles pour le montage des éléments de marquage et leur nombre est exactement le même que le nombre d'éléments de marquage à monter de sorte qu'aucun espace superflu n'est gaspillé.

Le cylindre de marquage peut conformément à la revendication 13 fait lui-même partie d'un système de marquage global monté à rotation selon le principe d'un revolver. Sans modification structurelle on peut apposer des motifs de marquage différents sur différents produits, un cylindre propre pouvant, par exemple, exister pour chaque produit. Lors d'un changement de produit, on choisit une empreinte de marquage déterminée ou un cylindre déterminé, en sélectionnant le circuit de chauffage correspondant ou en procédant comme dans le cas de la tête revolver d'un microscope en vue de sélectionner une optique spéciale pour les besoins en question.

Suivant la revendication 14, un cylindre de marquage coopére avec un autre cylindre de marquage dont la rotation est synchronisée par rapport au premier, ce qui permet la réalisation de motifs très complexes, sans nécessité la construction d'un corps de base de cylindre de plus grandes dimensions.

Par l'introduction d'un dispositif de correction spécial, une empreinte de marquage produite peut être orientée à l'intérieur d'une autre empreinte de marquage ce qui permet l'obtention d'effets graphiques et/ou fonctionnels particuliers.

L'invention a également pour objet un procédé pour apposer des marques sur une bande en laine minérale contenant un liant dans lequel la surface de la bande déplacée par une bande transporteuse en mouvement est soumise à l'action thermique d'un cylindre selon l'invention, disposé de manière stationnaire.

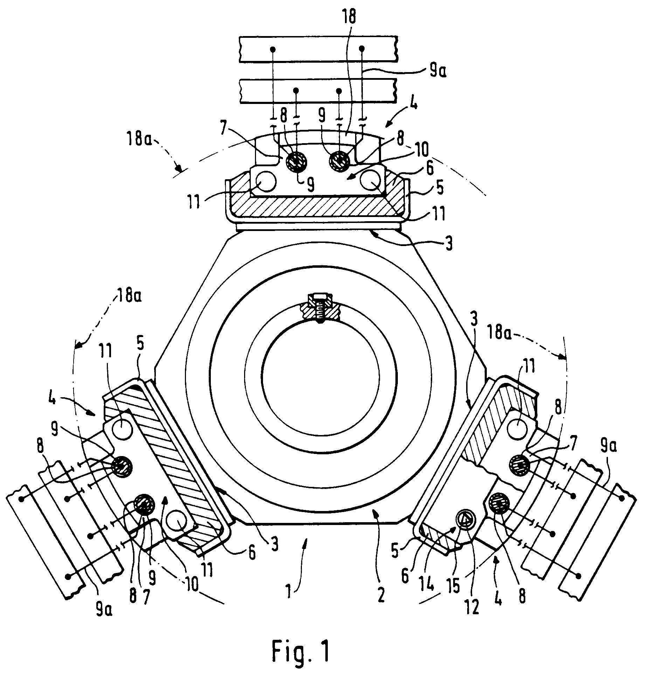

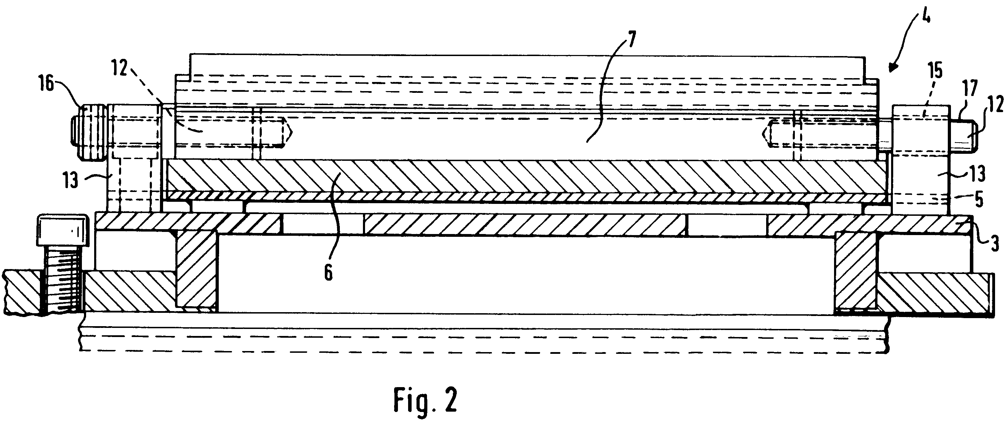

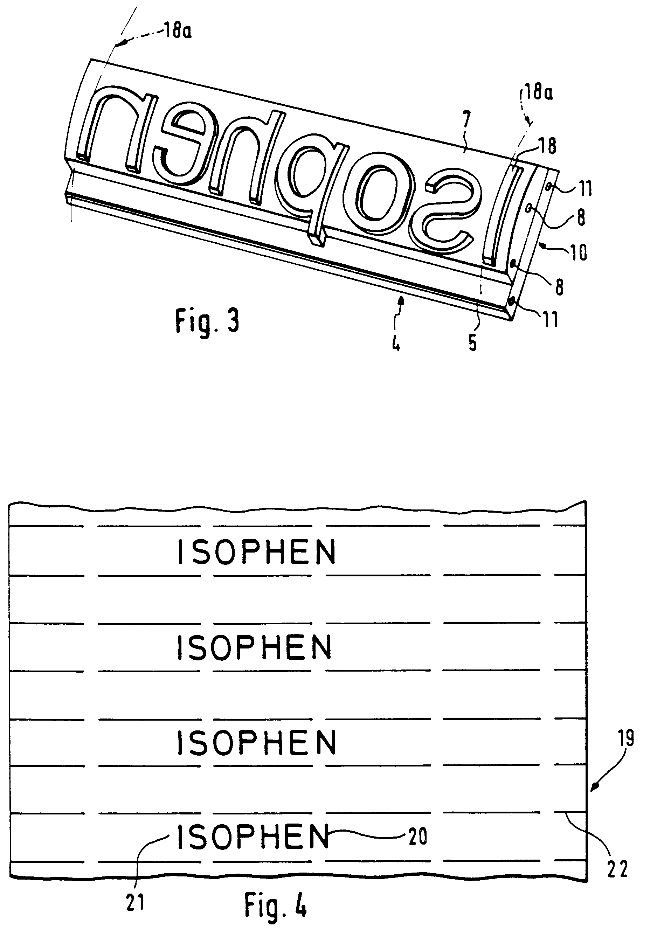

D'autres avantages et particularités de l'invention ressortent de la description suivante d'un exemple de réalisation faite en référence aux dessins annexés qui représentent :
. **figure** 1 : une vue en coupe transversale d'un corps de base d'un cylindre muni d'éléments de marquage conformes à l'invention,
. **figure** 2 : une vue en coupe longitudinale d'un élément de marquage,
. **figure 3** : une vue en perspective d'un élément de marquage conforme à l'invention,
. **figure 4** : une bande de laine minérale portant un motif de marquage.

La référence 1 désigne un cylindre d'un dispositif de marquage thermique, dans lequel un élément de marquage 4 est fixé sur une des grandes faces polygonales 3 d'un corps de base hexagonal.

Les détails concernant la fixation du cylindre 1 sur un arbre, la fixation des éléments de marquage 4 sur les faces 3, et l'alimentation électrique des éléments de marquage ressortent de manière évidente de la figure 1.

L'utilisation d'une surface de base hexagonale aboutit à une simplification de la construction car l'élément de marquage 4 est alors monté sur une face plane. Des détails au sujet du tourillonnement, de l'entraînement, du système de montée-baisse d'un dispositif de marquage thermique, sont donnés dans la demande de brevet européen EP-A-244 035.

Les éléments de marquage 4 sont constitués d'un profilé de retenue 5, d'un bloc isolant calorifuge 6 fait d'un produit de substitution de l'amiante et d'une plaque d'impression 7 servant de bande typographique. La plaque d'impression 7 présente deux forures parallèles, côté à côté, supérieures 8, dans lesquelles sont introduits des éléments chauffants 9, ayant la forme de cartouches chauffantes, alimentés en courant électrique par des lignes 9a. De plus, la plaque d'impression 7 présente, dans chacune de ses faces d'about 10, deux forures inférieures 11, dans lesquelles sont enfoncés et fixés les éléments de fixation 12 en forme de tourillons, qui sont partiellement de section polygonale (dans l'exemple représenté triangulaire). Les tourillons 12 sont montés dans des blocs-paliers 13 à travers une forure 14 dans laquelle est inséré un élément 15 en oxyde de zirconium ayant la forme d'une douille-palier. L'utilisation d'oxyde de zirconium pour l'élément 15 contribue à rendre très faible la quantité d'énergie thermique dissipée à travers cet élément 15 ce qui exclut une perturbation de l'empreinte de marquage due à ces déperditions de chaleur. Dans l'exemple de réalisation de la figure 2, la mobilité de l'élément de marquage 4 est supprimée du côté gauche par un tourillon 12 agissant conjointement avec le bloc-palier 13 et un élément de butée 16 bloqué de manière adéquate. Par contre, le côté droit de l'élément de marquage 4 est conçu de manière telle que le tourillon 12 soit monté à coulissement, par sa partie de section transversale triangulaire, dans la douille-palier 15 insérée dans le bloc 13. En cas de dilatation thermique, l'élément de marquage 4 glisse sur les faces de prisme 17 du tourillon 12 dans la douille-palier 15. On évite ainsi de manière sûre toute déformation de la plaque d'impression 7 qui serait due à des effets thermiques.

Les caractères de marquage 18 font saillie de 5 mm au-dessus de la surface de la plaque d'impression 7 et forment en lettres inversées la griffe "ISOPHEN" lisible à l'endroit sur la bande en laine minérale comme on peut le voir sur la figure 3. Les caractères 18 sont disposés de manière telle que l'enveloppe 18a de leur surface soit approximativement confondue avec celle d'un cylindre dont l'axe coïncide avec celui du cylindre 1. En fonctionnement, les caractères de marquage ont une température typiquement de l'ordre de 400°C. Cette température suffit pour altérer le liant organique d'une bande en laine minérale 19, dans la zone en contact avec les caractères 18. Cependant, la température utilisée peut varier en fonction de la vitesse de marquage et de la qualité ou de la nature du liant organique. Les caractères 18 reçoivent leur énergie thermique des éléments chauffants 9 en forme de cartouches chauffantes.

Le corps de base 2 du cylindre est mis en mouvement à l'aide d'un entraînement, ici non représenté. La vitesse angulaire du corps de base de cylindre 2 est adaptée à l'avancement de la bande de laine minérale 19 d'une manière telle que, lorsque les caractères 18 formant en "négatif" la griffe "ISOPHEN" sont pressées contre la bande et roulent sur celle-ci, des zones d'altération uniformes 20 formant la griffe 21 "ISOPHEN" sont obtenues. Une autre possibilité est que le cylindre 1 soit entraîné directement par la bande en laine minérale 19.

Les zones d'altération 20 sont renforcées par une certaine pression d'appui du cylindre 1. La pression d'appui se transmet aux caractères 18 chauffés à environ 400°C et améliore ainsi le transfert de chaleur entre ces caractères bons conducteurs thermiques, et le liant de la bande de laine minérale 19. Ainsi même si le cylindre s'enfonce peu dans la bande 19, un temps de contact relativement court entre les caractères 18 et la bande de laine minérale 19 suffit à la formation d'une zone d'altération 20 aux contours nettement définis. La délimitation nette de la zone d'altération 20 est favorisée par le fait que les endroits de marquage 18 font saillie d'environ 5 mm au-dessus de la surface de la plaque d'impression 7, avec pour résultats que seuls les caractères 18 s'impriment dans la surface de la bande en laine minérale 19. De plus, comme l'enveloppe de la surface des caractères 18 est au moins approximativement cylindrique, l'action exercée par les caractères sur la bande 19 est uniforme, ce qui à nouveau contribue à une meilleure délimitation des zones d'altération 20.

En utilisant des caractères 18 qui forment l'image inversée dans un miroir d'une représentation graphique, on peut transférer des motifs graphiques sur la bande en laine minérale 19.

On peut aussi utiliser des éléments chauffants 9 en forme de cartouches chauffantes, dont la puissance de chauffage peut être modifiée dans le sens de leur longueur afin d'équilibrer les déperditions de chaleur dans les diverses zones de la plaque d'impression 7 et au niveau des caractères 18. On obtient ainsi des empreintes de marquage homogènes suite à l'altération homogène du liant organique dans la bande en laine minérale 19.

Si on souhaite au contraire obtenir une empreinte de marquage inhomogène, on utilise des éléments chauffants 9 dont la puissance de chauffage est réglée de manière à chauffer plus intensément aux endroits souhaités de la plaque 7 ce qui donne des gradations différentes du degré d'altération du liant. Ces gradations différentes se traduisent par un noircissement variable des zones d'altération 20, analogue à la gradation des gris d'un film photographique en noir et blanc. On peut ainsi obtenir des empreintes de marquage complexes à effet graphique.

La bande en laine minérale 19 est, de préférence, d'un type tel que décrit dans la demande de brevet EP-A-244 035. Elle peut également présenter des empreintes de marquage supplémentaires 22, produites par un autre dispositif de marquage thermique. Il peut s'agir par exemple d'une bande en laine minérale 19 non revêtue, d'une largeur de 1200 mm, d'une épaisseur nominale de 100 mm et d'une longueur de 6m. Sa masse volumique apparente pourra être comprise entre 10 et 30 kg/ m³, en particulier entre 14 et 25 kg/m³ et, dans des exemples concrets de 18 kg/m³. A titre de liant, il convient de citer en particulier une résine phénolique à raison de 6 à 7 % en poids sur la base du liant sec dans le produit, la teneur en résine phénolique constituant le liant pouvant dans cet exemple être de 6,6 % en poids (sec).

En ce qui concerne les propriétés et les utilisations possibles d'une telle bande de laine minérale 19, ainsi que d'autres détails, il convient de se référer intégralement au brevet allemand DE-36 12 858.

## Revendications

1. Dispositif de marquage thermique de la surface d'une bande en laine minérale contenant un liant, constitué par un cylindre (1) monté en rotation dans un châssis mobile en hauteur, le cylindre portant sur sa périphérie au moins un élément de marquage (4) chauffé électriquement,
**caractérisé en ce que**
l'élément de marquage (4) porte une plaque d'impression (7) dont les caractères (18), en forme, par exemple, de lettres, chiffres, signes, images, font saillie au-dessus de la surface de la plaque d'impression (7),
**en ce que**
l'enveloppe (18a) des caractères (18) est au moins approximativement confondue avec celle d'un cylindre droit dont l'axe coïncide avec l'axe du cylindre (1),
**et en ce que**
l'élément de marquage (4) est chauffé par au moins un élément chauffant (9) dont la puissance de chauffage est réglable de manière différentielle pour des locations différents en vue de l'obtention d'une image de marquage désirée.

2. Dispositif de marquage thermique suivant la revendication 1, **caractérisé en ce que** les caractères (18) de la plaque d'impression (7) font saillie d'au moins 5 mm au-dessus de la surface de la plaque d'impression (7).

3. Dispositif de marquage thermique suivant la revendication 2, **caractérisé en ce que** les différences de déperdition de chaleur entre les différentes zones de la plaque d'impression (7) et entre les caractères (18) sont compensées localement par un apport complémentaire positif ou négatif en une puissance de chauffage ce qui permet l'obtention d'une empreinte homogène.

4. Dispositif de marquage thermique suivant la revendication 1 ou 2, **caractérisé en ce qu'**en vue de l'obtention d'une image de marquage inhomogène, la puissance de chauffage est sélectivement augmentée ou diminuée à l'endroit de la déperdition dans des zones différentes de la plaque d'impression (7).

5. Dispositif de marquage thermique suivant l'une quelconque des revendications précédentes, **caractérisé** en **ce que** l'élément chauffant (9) est une cartouche chauffante.

6. Dispositif de marquage thermique suivant la revendication 5, **caractérisé en ce que** les cartouches chauffantes présentent des enroulements chauffants dont les épaisseurs et ainsi la puissance de chauffage varient dans le sens de la longueur de la cartouche chauffante.

7. Dispositif de marquage thermique suivant l'une quelconque des revendications précédentes, **caractérisé** en **ce que** la plaque d'impression (7) est d'une configuration cintrée d'une manière approximativement conforme à la circonférence d'un cercle centré sur l'axe du cylindre (1).

8. Dispositif de marquage thermique suivant l'une quelconque des revendications précédentes, **caractérisé** en **ce que** chaque élément de marquage (4) est monté à coulissement sur le corps de base (2) du cylindre en intercalant un bloc isolant calorifuge (6).

9. Dispositif de marquage thermique suivant l'une quelconque des revendications 1 à 8, **caractérisé en ce que** les éléments de marquage (4) sont maintenus par des éléments de fixation (12) dont la forme et/ou le montage dans des éléments (15) faiblement thermoconducteurs, contribuent à ce que l'énergie thermique soit évacuée par la surface externe de l'élément de marquage (4).

10. Dispositif de marquage thermique suivant la revendication 9, **caractérisé en ce que** les éléments de fixation (12) ont au moins partiellement la forme d'un cylindre polygonal, en particulier d'un prisme triangulaire et/ou **en ce que** les éléments (15) faiblement thermoconducteurs contiennent de l'oxyde de zirconium.

11. Dispositif de marquage thermique suivant l'une quelconque des revendications 1 à 10, **caractérisé en ce qu'**un apport d'énergie thermique propre est prévu pour les éléments de marquage (4) individuels ou des groupes de ces éléments de marquage.

12. Dispositif de marquage thermique suivant l'une quelconque des revendications 1 à 11, **caractérisé en ce que** le corps de base (2) du cylindre a la forme d'un polygone cylindrique dont le nombre de faces correspond au nombre maximum des éléments de marquage (4) semblables ou différents disposés à la périphérie du cylindre.

13. Dispositif de marquage thermique suivant l'une quelconque des revendications 1 à 12, **caractérisé en ce que** le cylindre (1) fait lui-même partie d'un système de marquage global monté à rotation pour plusieurs empreintes de marquage (21) semblables ou différentes, selon le principe d'un revolver.

14. Dispositif de marquage thermique suivant l'une quelconque des revendications 1 à 13, **caractérisé en ce que** le cylindre (1) est synchronisé avec un autre cylindre de marquage, les deux cylindres coopérant à la réalisation d'une empreinte complexe.

15. Dispositif de marquage thermique suivant la revendication 14, **caractérisé en ce que** le cylindre (1) peut être déplacé au moyen d'un dispositif de correction spécial dans le sens du marquage, pour que l'empreinte de marquage (21) produite soit obtenue à l'intérieur d'une autre empreinte de marquage (22).

16. Procédé pour apposer des marques sur une nappe de laine minérale contenant un liant, dans lequel la surface de la bande déplacée par une bande transporteuse en mouvement est soumise à l'action thermique d'un cylindre disposé de manière stationnaire qui, sur sa périphérie, comprend au moins un élément de marquage chauffé de préférence électriquement, **caractérisé par** l'utilisation d'un cylindre faisant partie du dispositif de marquage thermique suivant l'une des revendications 1 à 15.

## Claims

1. A device for heat printing the surface of a strip or web of mineral wool containing a binder, the device consisting of a cylinder (1) rotatably mounted in a vertically movable frame, the cylinder having at least one electrically heated printing element (4) on its periphery,
**characterised in that**
the printing element (4) carries an impression plate (7) whose characters (18), for example, in the form of letters, figures, signs and images, project above the surface of the impression plate (7);
that the envelope (18a) of the characters coincides at least approximately with the envelope of a right cylinder whose axis coincides with the axis of the cylinder (1), and
that the printing element (4) is heated by at least one heating element (9) whose heating power can be adjusted differently at different places in order to produce a desired print image.

2. A device according to claim 1, characterised in that the characters (18) of the impression plate (7) project at least 5 mm above the surface thereof.

3. A device according to claim 2, **characterised in that** the heat loss differences between the various zones of the impression plate (7) and between the characters (18) are compensated for locally by an additional positive or negative variation of heating power so that a homogeneous print is obtained.

4. A device according to claim 1 or 2, **characterised in that** to obtain a non-homogeneous print image the heating power is selectively increased or reduced at the place of the heat loss in different zones of the impression plate (7).

5. A device according to any of the previous claims, **characterised in that** the heating element (9) is a heating cartridge.

6. A device according to claim 5, **characterised in that** the heating cartridges have heating windings whose thicknesses and therefore the heating power vary lengthwise of the heating cartridge.

7. A device according to any of the previous claims, **characterised in that** the impression plate (7) has a waisted configuration approximating to the circumference of a circle centred on the axis of the cylinder (1).

8. A device according to any of the previous claims, **characterised in that** each printing element (4) is disposed for sliding on the base body (2) of the cylinder with the interposition of a heat-insulating block (6).

9. A device according to any of claims 1 to 8, **characterised in that** the printing elements (4) are retained by fixing elements (12) whose shape and/or disposition in elements (15) which are poor heat conductors help to ensure heat removal by way of the outside surface of the printing element (4).

10. A device according to claim 9, **characterised in that** the fixing elements (12) have at least partially the shape of a polygonal cylinder, more particularly of a triangular prism, and/or the elements (15) which are poor heat conductors contain zirconium oxide.

11. A device according to any of claims 1 to 10, **characterised in that** an individual heat supply is provided for individual printing elements (4) or groups thereof.

12. A device according to any of claims 1 to 11, **characterised in that** the base body (2) of the cylinder has the shape of a cylindrical polygon having sides to a number corresponding to the maximum number of similar or different printing elements (4) disposed on the cylinder periphery.

13. A device according to any of claims 1 to 12, **characterised in that** the cylinder (1) itself is part of a complete rotatable turret-like printing system providing a number of similar or different print images (21).

14. A device according to any of claims 1 to 13, **characterised in that** the cylinder (1) is synchronised with another printing cylinder, the two cylinders co-operating to produce a complex print.

15. A device according to claim 14, **characterised in that** the cylinder (1) can be moved by means of a special correcting device in the printing direction in order that the print image (21) produced may be obtained inside another print image (22).

16. A method for printing the surface of a strip or web of mineral wool containing a binder, wherein the surface of this web being displaced by a moving transport belt is subjected to the thermal influence of a stationary cylinder having on its periphery at least one printing element (4) which is heated, preferably electrically, **characterised by** use of a cylinder included in the device for heat printing according to any of claims 1 to 15.

## Patentansprüche

1. Thermische Markierungsvorrichtung für die Oberfläche einer bindemittelhaltigen Mineralwollebahn, bestehend aus einer an einem in der Höhe verfahrbaren Gestell drehbar gelagerten Walze (1), die auf ihrem Umfang mindestens ein elektrisch beheiztes Markierungselement (4) aufweist,
**dadurch gekennzeichnet,**
daß das Markierungselement (4) eine Druckplatte (7) trägt, deren Markierungsstellen (18) in Form von beispielsweise Buchstaben, Ziffern, Zeichen, Bildern über die Oberfläche der Druckplatte (7) vorstehen,
daß die Umhüllende (18a) der Markierungsstellen (18) wenigstens annähernd die Mantellinie eines Kreisringzylinders ist, dessen Achse mit der Achse der Walze (1) zusammenfällt, und
daß das Markierungselement (4) durch mindestens ein Heizelement (9) beheizt wird, dessen Heizleistung örtlich unterschiedlich einstellbar ist, um ein gewünschtes Markierungsbild herzustellen.

2. Vorrichtung nach Anspruch 1, **dadurch gekennzeichnet, daß** die Markierungsstellen (18) der Druckplatte (7) mindestens 5 mm über die Oberfläche der Druckplatte (7) vorstehen.

3. Vorrichtung nach Anspruch 2, **dadurch gekennzeichnet, daß** zur Erzielung eines homogenen Markierungsbildes die unterschiedlich hohen Wärmeverluste in unterschiedlichen Bereichen der Druckplatte (7) sowie der Markierungsstellen (18) durch komplementär höhere bzw. geringere Zufuhr von Heizleistung örtlich ausgleichbar sind.

4. Vorrichtung nach Anspruch 1 oder 2, **dadurch gekennzeichnet, daß** zur Erzielung eines inhomogenen Markierungsbildes in unterschiedlichen Bereichen der Druckplatte (7) die Heizleistung am Ort des Verlustes selektiv erhöht bzw. vermindert wird.

5. Vorrichtung nach einem der vorhergehenden Ansprüche, **dadurch gekennzeichnet, daß** das Heizelement (9) eine Heizpatrone ist.

6. Vorrichtung nach Anspruch 5, **dadurch gekennzeichnet, daß** die Heizpatronen Heizwicklungen aufweisen, deren Dicke und auch Heizleistung jeweils in Längsrichtung der Heizpatrone variieren.

7. Vorrichtung nach einem der vorhergehenden Ansprüche, **dadurch gekennzeichnet, daß** die Druckplatte (7) in wenigstens annähernder Angleichung an den Umfang eines Kreises mit Mittelpunkt in der Achse der Walze (1) gekrümmt ausgebildet ist.

8. Vorrichtung nach einem der vorhergehenden Ansprüche, **dadurch gekennzeichnet, daß** jedes Markierungselement (4) an dem Walzengrundkörper (2) unter Zwischenschaltung eines wärmedämmenden Isolierblocks (6) gleitverschieblich gelagert ist.

9. Vorrichtung nach einem der Ansprüche 1 bis 8, **dadurch gekennzeichnet, daß** die Markierungselemente (4) von Befestigungselementen (12) gehalten werden, die aufgrund ihrer Bauform und/oder ihrer Lagerung in schwach wärmeleitenden Bauelementen (15) zur Abgabe der Wärmeenergie über die Außenfläche des jeweiligen Markierungselementes (4) beitragen.

10. Vorrichtung nach Anspruch 9, **dadurch gekennzeichnet, daß** die Befestigungselemente (12) zumindest teilweise die Form eines polygonen Zylinders, insbesondere eines trigonalen Prismas aufweisen und/oder **dadurch, daß** die schwach wärmeleitenden Elemente (15) Zirconiumoxid enthalten.

11. Vorrichtung nach einem der Ansprüche 1 bis 10, **dadurch gekennzeichnet, daß** für die einzelnen Markierungselemente (4) oder Gruppen von diesen eine eigene Heizenergiezufuhr vorgesehen ist.

12. Vorrichtung nach einem der Ansprüche 1 bis 11, **dadurch gekennzeichnet, daß** der Walzengrundkörper (2) die Form eines zylindrischen Vieleckes mit einer Flächenzahl hat, welche der maximalen Anzahl der umfangsseitig angeordneten, gleichartigen oder unterschiedlichen Markierungselemente (4) entspricht.

13. Vorrichtung nach einem der Ansprüche 1 bis 12, **dadurch gekennzeichnet, daß** die Walze (1) selbst Teil eines drehbar gelagerten Gesamt-Markiersystems für mehrere gleichartige oder verschiedene Druckmarkierungen (21) im Sinne eines Revolverprinzips ist.

14. Vorrichtung nach einem der Ansprüche 1 bis 13, **dadurch gekennzeichnet, daß** die Walze mit einer weiteren Markierungswalze so synchronisiert ist, daß die beiden Walzen bei der Herstellung eines zusammengesetzten Druckbildes zusammenwirken.

15. Vorrichtung nach Anspruch 14, **dadurch gekennzeichnet, daß** die Walze (1) mittels einer speziellen Korrektureinrichtung in Markierrichtung so verstellbar ist, daß die erzeugte Druckmarkierung innerhalb einer weiteren Druckmarkierung (22) entsteht.

16. Verfahren zum Aufbringen von Markierungen auf eine bindemittelhaltige Mineralwollebahn, bei dem die Oberfläche dieser auf einem laufenden Transportband liegenden Bahn der Wärmeeinwirkung einer ortsfest angeordneten Walze ausgesetzt wird, die auf ihrem Umfang mindestens ein vorzugsweise elektrisch beheiztes Markierungselement besitzt, **gekennzeichnet durch** die Verwendung einer Walze gemäß der thermischen Markierungsvorrichtung nach mindestens einem der Ansprüche 1 bis 15.
